# EUROPÄISCHE PATENTANMELDUNG

(11) **EP 1 262 705 A1**
(43) Veröffentlichungstag der Anmeldung: **04.12.2002**
(21) Anmeldenummer: 02003872.5
(22) Anmeldetag: 21.02.2002
(51) Int. Cl.: F16L 37/084, A01C 7/20

(54) **Kupplung für eine Saatgut führende Leitung einer landwirtschaftlichen Sämaschine**

(30) Priorität: 20.03.2001 US 812663
(71) Anmelder: DEERE & COMPANY, Moline, Illinois 61265-8098 (US)
(72) Erfinder: Mariman, Nathan Albert, Geneseo, IL 61254 (US)
(74) Vertreter: Holst, Sönke, Dr.

(57) **Zusammenfassung**

Die Erfindung bezieht sich auf eine Kupplung (30) für eine Saatgut führende Leitung (16) einer landwirtschaftlichen Sämaschine (10), die in einen gekuppelten und einen entkuppelten Zustand bringbar ist und im gekoppelten Zustand einen Saatgutdurchlass (36) definiert, wobei die Kupplung (30) einen ersten Teil (32) und einen zweiten Teil (34) aufweist. Es wird vorgeschlagen, dass sich am Umfang des ersten Teils (32) ein Verriegelungskanal (42) befindet, welcher an seinem Umfang eine Verriegelungsoberfläche (52) aufweist und dass der zweite Teil (34) wenigstens zwei federnde Verriegelungszungen (56) aufweist, die jeweils mit einem Handgriff (64), einem federnden Scharnier (62) und einem Riegel (66) versehen sind, wobei der Riegel (66) eingerichtet ist, an der Verriegelungsoberfläche (52) anzugreifen, wenn die Kupplung (30) sich im gekuppelten Zustand befindet.

## Beschreibung

Die Erfindung betrifft eine Kupplung für eine Saatgut führende Leitung einer landwirtschaftlichen Sämaschine, die in einen gekuppelten und einen entkuppelten Zustand bringbar ist und im gekoppelten Zustand einen Saatgutdurchlass definiert, wobei die Kupplung einen ersten Teil und einen zweiten Teil aufweist.

Da Sämaschinen immer größer geworden sind und der Bediener immer größere Flächen bepflanzen möchte, wurden verschiedene Wege zur Vergrößerung der Effizienz des Bedieners beschritten. Bei einigen Anwendungen enthält ein zentraler Hauptsaatgutbehälter das Saatgut, aus dem es auf die einzelnen Pflanzeinheiten oder direkt in die Pflanzfurche verteilt wird. Als problematisch haben sich lösbare Verbindungen für die Saatgutleitungen erwiesen.

Das der Erfindung zugrunde liegende Problem wird darin gesehen, eine einfache und effektive abtrennbare Kupplung für eine Saatgut führende Leitung bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die trennbare Kupplung hat einen ersten Teil und einen zweiten Teil, die gemeinsam einen Saatgutdurchlass definieren. Der erste Teil weist an seinem Umfang einen umlaufenden Verriegelungskanal auf, an dessen Umfang eine umlaufende Verriegelungsoberfläche vorgesehen ist. Der zweite Teil ist mit mindestens zwei - vorzugsweise integrierten, d. h. mit ihm einteilig hergestellten - federnden Verriegelungszungen versehen, die jeweils mit einem Handgriff, einem federnden Scharnier und einem Handgriff ausgestattet sind. Die Riegel der axial orientierten Verriegelungszungen sind am Scharnier befestigt und eingerichtet, im eingekuppelten Zustand in den Verriegelungskanal des ersten Kanals einzugreifen. Zum Ankuppeln wird der zweite Teil auf den ersten Teil gesteckt. Die Riegel liegen dann an der Verriegelungsoberfläche an und fixieren auf diese Weise den zweiten Teil am ersten Teil, wobei sie durch die federnde Wirkung des Scharniers in ihre Rastposition vorgespannt werden. Der Handgriff dient zur manuellen Bewegung der Riegel, insbesondere zum Lösen beim Abkuppeln.

Auf diese Weise erhält man eine Kupplung für eine Saatgut führende Leitung, die sicher arretiert ist und sich schnell anbringen und lösen lässt.

In einer bevorzugten Ausführungsform ist der zweite Teil mit einem Saatgutverschluss ausgestattet. Denkbar wäre aber auch, den Saatgutverschluss im ersten Teil der Kupplung unterzubringen.

Vorzugsweise befindet sich der erste Teil bezüglich der Flussrichtung des Saatguts stromab des zweiten Teils.

Der erste und/oder der zweite Teil können an eine Saatgut führende Leitung ankoppelbar sein. Dazu sind sie mit einem Leitungseingriffsabschnitt ausgestattet, der beispielsweise an seiner Außenseite mit umlaufenden Eingriffsrippen versehen ist, welche zum Eingriff an der Saatgut führenden Leitung eingerichtet sind. Die Leitung wird auf den ersten bzw. zweiten Teil aufgesteckt und durch die Eingriffsrippen festgelegt.

Um den ersten Teil an den zweiten Teil Saatgut leitend zu koppeln, ist vorgeschlagen, den ersten Teil mit einem Kupplungsrohr auszustatten, während der zweite Teil mit einer Kupplungshülse versehen wird (bzw. umgekehrt). Das Kupplungsrohr wird in der Hülse aufgenommen, wenn die Kupplung gekuppelt ist.

Der Saatgutverschluss kann ein verschiebbares Verschlusselement umfassen, welches verschiebbar in einem Schlitz des zweiten Teils angeordnet ist und den Schlitz im geschlossenen Zustand freigibt und im geöffneten Zustand verschließt. Im Einzelnen kann der Schlitz in einem blockartigen Element des zweiten Teils angeordnet sein. Der Block kann mit einem Führungsstift versehen sein, der in einen Führungsschlitz des Verschlusselements eingreift.

Der Verriegelungskanal des ersten Teils ist durch die Verriegelungsoberfläche begrenzt. Sie kann durch einen am Umfang des ersten Teils angeordneten umlaufenden Verriegelungsring definiert sein. Die Riegel greifen dann im gekoppelten Zustand am Verriegelungsring an. Der Verriegelungsring ist vorzugsweise mit einer abgewinkelten Oberfläche versehen, wobei auch die Riegel mit einer abgeschrägten Oberfläche ausgestattet sind, so dass die abgeschrägte Oberfläche der Riegel beim Ankuppeln des ersten Teils an den zweiten Teil an der abgewinkelten Oberfläche angreift und die Riegel auseinander bewegt und somit selbsttätig öffnet. Dadurch ist beim Ankuppeln keine manuelle Bewegung der Riegel erforderlich. Sie werden beim Ankuppeln durch die genannten Oberflächen auseinander bewegt und verrasten selbsttätig aufgrund der federnden Wirkung des Scharniers, wenn die Riegel in den Verriegelungskanal eingreifen und an der Verriegelungsoberfläche anliegen.

Der Verriegelungskanal kann auf seiner dem Verriegelungsring gegenüberliegenden Seite durch einen umlaufenden Anschlagring definiert sein, der den Bewegungsbereich des zweiten Teils auf dem ersten Teil begrenzt.

In den Zeichnungen ist ein nachfolgend näher beschriebenes Ausführungsbeispiel der Erfindung dargestellt. Es zeigt:
- Fig. 1: eine schematische Ansicht eines landwirtschaftlichen Sägeräts,
- Fig. 2: eine perspektivische Ansicht der Kupplung der Saatgut führenden Leitung,
- Fig. 3: eine Ansicht der Kupplung in der geschlossenen Position, und
- Fig. 4: eine Ansicht der geöffneten Kupplung.

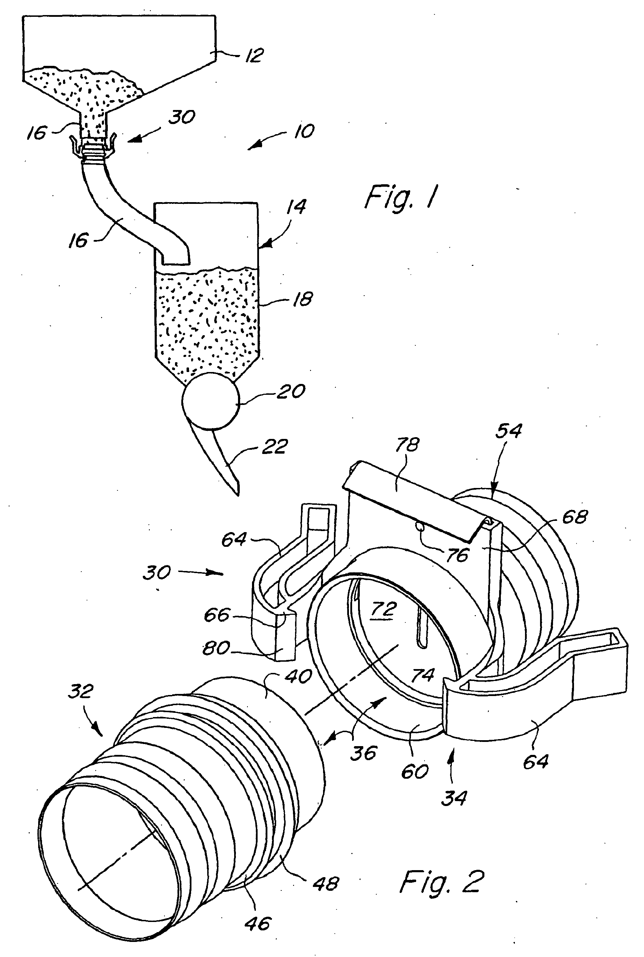

Die in Figur 1 schematisch dargestellte Sämaschine 10 umfasst einen Hauptsaatgutbehälter 12, eine Vielzahl an Pflanzeinheiten 14 (von denen nur eine gezeigt ist) und eine Saatgut führende Leitung 16, die sich zwischen dem Hauptsaatgutbehälter 12 und den Pflanzeinheiten 14 erstreckt. Saatgut aus dem Hauptsaatgutbehälter 12 strömt durch die das Saatgut führende Leitung 16 zu den Pflanzeinheiten 14. Das Saatgut kann aufgrund pneumatischen Drucks und/oder Schwerkraft durch die Leitung 16 gefördert werden. Das Saatgut aus der Leitung 16 bewegt sich in einen Behälter 18 der Pflanzeinheit 14. Der Behälter 18 der Pflanzeinheit 14 führt Saatgut einem Messsystem 20 zu. Vom Messsystem 20 wird das Saatgut durch ein Särohr 22 einer Pflanzfurche zugeführt, die von einem nicht gezeigten Furchenöffner erzeugt wird. Die das abgemessene Saatgut enthaltende Furche wird durch ein ebenfalls nicht eingezeichnetes Furchenschließsystem geschlossen. Das Saatgut aus dem Hauptsaatgutbehälter 12 könnte abgemessen werden, bevor es in die Saatgut führende Leitung gelangt. Bei einer derartigen Konfiguration wird das abgemessene Saatgut von der Saatgut führenden Leitung direkt in die Pflanzfurche getragen.

Die Saatgut führende Leitung 16 ist an den Hauptsaatgutbehälter 12 durch eine abnehmbare Kupplung 30 angeschlossen. Die abnehmbare Kupplung hat einen ersten Teil 32, der den männlichen Abschnitt der Kupplung umfasst, und einen zweiten Teil 34, der den weiblichen Abschnitt der Kupplung umfasst. In der in Figur 1 dargestellten Ausführungsform ist der erste Teil 32 der Kupplung 30 mit der stromab liegenden Seite der Saatgut führenden Leitung 16 gekoppelt und der zweite Teil 34 mit der stromauf liegenden Seite der Leitung 16 nahe des Hauptsaatgutbehälters 12 gekoppelt. Es ist anzumerken, dass die Kupplung 30 an jeder beliebigen Stelle entlang der Länge der Saatgut führenden Leitung 16 angeordnet werden könnte. Der erste Teil 32 kann direkt an der Pflanzeinheit 14 angebracht sein oder der zweite Teil 34 kann direkt am Auslass des Hauptsaatgutbehälters 12 befestigt sein. Der erste Teil 32, der zweite Teil 34 und die Leitung 16 definieren einen Saatgutdurchlass 36, den das Saatgut durchläuft.

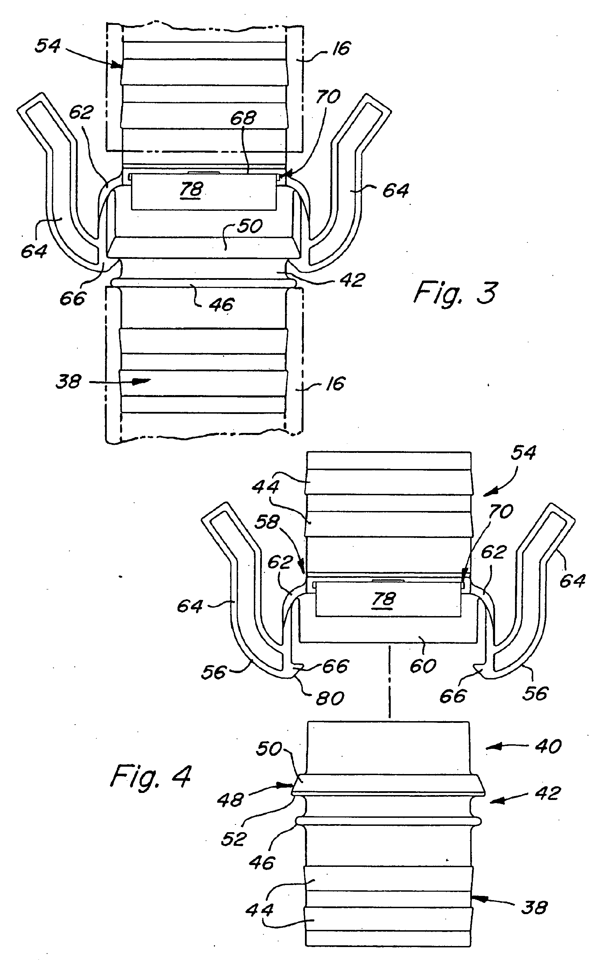

Der erste Teil 32 umfasst ein zylindrisches Kunststoffrohr, das einen Leitungseingriffsabschnitt 38, ein Kupplungsrohr 40 und einen Verriegelungskanal 42 aufweist. Der Leitungseingriffsabschnitt 38 ist mit zwei sich um den Umfang umlaufenden Eingriffsrippen 44 versehen, um in das Innere der Leitung 16 einzugreifen. Der Verriegelungskanal 42 ist durch einen um den Umfang umlaufenden Anschlagring 46 und einem um den Umfang umlaufenden Verriegelungsring 48 definiert. Die Leitung 16 liegt an der der Leitung 16 zugewandten Seite des Anschlagsrings 46 an, wie in Figur 3 dargestellt. Der umlaufende Verriegelungsring 48 hat eine umlaufende, abgewinkelte Oberfläche 50, die sich radial in Richtung auf eine um den Umfang umlaufende Verriegelungsoberfläche 52 zu erweitert.

Der zweite Teil 34 der Kupplung 30 umfasst ein zylindrisches Kunststoffrohr, das einen Leitungseingriffsabschnitt 54, integrierte, federnde Verriegelungszungen 56, einen Saatgutverschluss 58 und eine Kupplungshülse 60 aufweist. Wie der Leitungseingriffsabschnitt 38 des ersten Teils 32 ist der Leitungseingriffsabschnitt 54 des zweiten Teils 34 mit zwei um den Umfang umlaufenden Eingriffsrippen 44 versehen, um in das Innere der Leitung 16 einzugreifen. Jede der Verriegelungszungen 56 ist mit einem federnden Scharnier 62, einem Handgriff 64 und einem Riegel 66 ausgestattet. In seinem verriegelten Zustand ist das Kupplungsrohr 40 des ersten Teils 32 der Kupplung 30 in die Kupplungshülse 60 des zweiten Teils 34 eingesetzt.

Der Saatgutverschluss 58 umfasst einen Block 68, der zwischen dem Leitungseingriffsabschnitt 54 und der Kupplungshülse 60 angeordnet ist. Der Block 68 ist mit einem Schlitz 70 ausgestattet, der sich in den Saatgutdurchlass 36 erstreckt. Ein verschiebbares Verschlusselement 72 ist im Schlitz 70 gleitend angeordnet. Das Verschlusselement 72 ist mit einem Führungsschlitz 74 zur Aufnahme eines am Block 68 angeordneten Führungsstifts 76 ausgestattet. Der Führungsstift 76 kann ein Bolzen oder eine Schraube sein. Das verschiebbare Verschlusselement 72 ist auch mit einem Handgriff 78 ausgestattet. Das verschiebbare Verschlusselement 72 hat eine in Figur 2 dargestellte geschlossene Position und eine geöffnete Position. In seiner geschlossenen Position ist das verschiebbare Verschlusselement 72 vollkommen in den Schlitz 70 eingefügt und stoppt den Fluss des Saatgut vom Hauptsaatgutbehälter 12 zum Behälter 18 der Pflanzeinheit 14. In seiner geöffneten Position ist das verschiebbare Verschlusselement aus dem Schlitz 70 herausgezogen, um den Durchgang von Saatgut zu ermöglichen.

Beim Ankuppeln des ersten Teils 32 an den zweiten Teil 34 wird der erste Teil 32 mit der daran befestigten Leitung 16 auf den zweiten Teil 34 zu bewegt, so dass das Kupplungsrohr 40 in die Kupplungshülse 60 eintritt. Die Riegel 66 der Verriegelungszungen 56 sind mit einer abgeschrägten Oberfläche 80 versehen, die mit der umlaufenden, abgewinkelten Oberfläche 50 zusammenwirkt, um die Riegel 66 nach außen vorzuspannen. Die Riegel 66 bewegen sich über den umlaufenden Verriegelungsring 48, bis sie selbsttätig an der umlaufenden Verriegelungsoberfläche 52 eingreifen. Zu diesem Zeitpunkt bringt die federnde Natur der Verriegelungszungen 56 die Riegel 66 in Eingriff, sie schnappen ein. Der Bediener würde dann den Saatgutverschluss 58 öffnen, indem er das verschiebbare Verschlusselement 72 aus dem Block 68 nach außen zieht. Der Führungsstift 76 verhindert, dass das verschiebbare Verschlusselement 72 völlig vom Block 68 entfernt wird.

Um die Leitung 16 abzukoppeln, schließt der Bediener zuerst das verschiebbare Verschlusselement 72 indem er es nach innen drückt. Dann drückt der Bediener die Handgriffe 64 nach innen, um die Riegel 66 von der umlaufenden Verriegelungsoberfläche 52 zu lösen, und schließlich wird der erste Teil 32 vom zweiten Teil 34 abgezogen.

## Patentansprüche

1. Kupplung (30) für eine Saatgut führende Leitung (16) einer landwirtschaftlichen Sämaschine (10), die in einen gekuppelten und einen entkuppelten Zustand bringbar ist und im gekoppelten Zustand einen Saatgutdurchlass (36) definiert, wobei die Kupplung (30) einen ersten Teil (32) und einen zweiten Teil (34) aufweist, **dadurch gekennzeichnet, dass** sich am Umfang des ersten Teils (32) ein Verriegelungskanal (42) befindet, welcher an seinem Umfang eine Verriegelungsoberfläche (52) aufweist und dass der zweite Teil (34) wenigstens zwei federnde Verriegelungszungen (56) aufweist, die jeweils mit einem Handgriff (64), einem federnden Scharnier (62) und einem Riegel (66) versehen sind, wobei der Riegel (66) eingerichtet ist, an der Verriegelungsoberfläche (52) anzugreifen, wenn die Kupplung (30) sich im gekuppelten Zustand befindet.

2. Kupplung (30) nach Anspruch 1, **dadurch gekennzeichnet, dass** der zweite Teil (34) mit einem Saatgutverschluss (58) ausgestattet ist, der in einen geöffneten und einen geschlossenen Zustand bringbar ist, wobei der Saatgutverschluss (58) im geöffneten Zustand einen Durchgang von Saatgut durch den zweiten Teil (34) ermöglicht und einen Durchgang von Saatgut durch den zweiten Teil (34) im geschlossenen Zustand unterbindet.

3. Kupplung (30) nach Anspruch 1 oder 2, **dadurch gekennzeichnet, dass** sich der erste Teil (32) stromab des zweiten Teils (34) befindet.

4. Kupplung (30) nach einem der Ansprüche 1 bis 3, **dadurch gekennzeichnet, dass** der erste Teil (32) und/oder der zweite Teil (34) mit einem Leitungseingriffsabschnitt (38, 54) versehen ist, deren Außenseiten vorzugsweise mit Eingriffsrippen (44) versehen sind, die zum Eingriff an der Leitung (16) eingerichtet sind.

5. Kupplung (30) nach einem der Ansprüche 1 bis 4, **dadurch gekennzeichnet, dass** der erste Teil (32) mit einem Kupplungsrohr (40) und der zweite Teil (34) mit einer Kupplungshülse (60) ausgestattet ist, wobei das Kupplungsrohr (40) in der Kupplungshülse (60) aufgenommen ist, wenn sich die Kupplung (30) im gekuppelten Zustand befindet.

6. Kupplung (30) nach einem der Ansprüche 2 bis 5, **dadurch gekennzeichnet, dass** der Saatgutverschluss (58) mit einem verschiebbaren Verschlusselement (72) ausgestattet ist, das verschiebbar in einem im zweiten Teil (34) angeordneten Schlitz (70) aufgenommen ist und zwischen einer offenen und einer geschlossenen Position beweglich ist, wobei die offene Position dem geöffneten Zustand des Saatgutverschlusses (78) und die geschlossene Position dem geschlossenen Zustand des Saatgutverschlusses (78) entspricht.

7. Kupplung (30) nach Anspruch 6, **dadurch gekennzeichnet, dass** der zweite Teil (34) mit einem Block (68) ausgestattet ist, in dem der Schlitz (70) geformt ist und dass der Block (68) mit einem Führungsstift (76) und das Verschlusselement (72) mit einem Führungsschlitz (74) versehen sind, in dem der Führungsstift (76) aufgenommen ist.

8. Kupplung (30) nach Anspruch 1 bis 7, **dadurch gekennzeichnet, dass** der erste Teil (32) an seinem Umfang mit einem Verriegelungsring (48) versehen ist, an deren Umfang sich die Verriegelungsoberfläche (52) befindet, an welcher die Riegel (66) der Verriegelungszungen (56) anliegen, wenn sich die Kupplung (30) im gekuppelten Zustand befindet.

9. Kupplung (30) nach Anspruch 8, **dadurch gekennzeichnet, dass** der Verriegelungsring (48) mit einer abgewinkelten Oberfläche (50) versehen ist und/oder jeder Riegel (66) mit einer abgeschrägten Oberfläche (80) versehen ist, wobei die abgeschrägte Oberfläche (80) und/oder die abgewinkelte Oberfläche (50) beim Ankuppeln des ersten Teils (32) an den zweiten Teil (34) die Riegel (66) auseinander bewegt.

10. Kupplung (30) nach Anspruch 8 oder 9, **dadurch gekennzeichnet, dass** der erste Teil (32) an seinem Umfang mit einem Anschlagring (46) versehen ist, der mit dem Verriegelungsring (48) den Verriegelungskanal (42) definiert.

11. Erster Teil (32) und/oder zweiter Teil (34) einer Kupplung (30) nach einem der vorhergehenden Ansprüche.

12. Sämaschine (10) mit einer Saatgut führenden Leitung (16), die mit einer Kupplung (30) nach einem der Ansprüche 1 bis 10 versehen ist.
